# EUROPÄISCHE PATENTSCHRIFT

(11) **EP 2 508 254 B1**
(45) Veröffentlichungstag und Bekanntmachung des Hinweises auf die Patenterteilung: **26.10.2016**
(21) Anmeldenummer: 11161335.2
(22) Anmeldetag: 06.04.2011
(51) Int. Cl.: B01J 19/08, C02F 1/48

(54) **Aquainduct**
Aquainduct
Aquainduct

(43) Veröffentlichungstag der Anmeldung: 10.10.2012
(73) Patentinhaber: BioWater AG, 83278 Traunstein (DE)
(72) Erfinder:
(74) Vertreter: Köster, Hajo

(56) Entgegenhaltungen:
- DE-A1- 4 318 429
- DE-A1- 19 806 275

## Beschreibung

Die Erfindung betrifft eine Wasserbehandlungsvorrichtung mit einem Rohr, das zur Wasserführung dient und mit mindestens einer eine Induktionsspule darstellenden Umwicklung versehen ist.

Die Verkalkung von wasserführenden Leitungen und von Vorrichtungen, in denen Wasser behandelt wird, beispielsweise erwärmt wird, stellt ein gravierendes Problem sowohl in privaten Haushalten als auch in Wirtschaftsunternehmen dar.

Eine Möglichkeit, diesen Problemen Herr zu werden, stellt die Entkalkung dar, beispielsweise mit Hilfe von Ionenaustauschern. Derartige Maßnahmen sind nicht nur teuer, sondern bedingen häufig auch den Einsatz von Chemikalien, welche entsorgt werden müssen. Dies ist beispielsweise beim Einsatz von Ionenaustauschern der Fall, die mit Hilfe von Kochsalz regeneriert werden.

Auch ist es schon bekannt, Wasser mit Magnetfeldern und insbesondere mit elektromagnetischen Feldern zu behandeln.

Eine dafür geeignete Vorrichtung ist aus der DE 198 06 275 A1 bekannt, die als nächstliegender Stand der Technik angesehen wird. Bei einer der dort beschriebenen Ausführungsformen ist ein ersten Führungsabschnitt in Form eines Fluidbehälters vorhanden, in dessen Innenraum ein zweiter Führungsabschnitt angeordnet ist. Letzterer besitzt eine U-förmige Konfiguration mit zwei parallel zueinander verlaufenden Schenkeln, die mit einer Spulenanordnung umwickelt sind.

Ein Verfahren zur Wasserbehandlung mit einem elektromagnetischen Feld, das mittels Spulen erzeugt wird, ist beispielsweise auch aus der DE 10004129A1 bekannt. Die Spulen sind dabei um wasserführende Rohrleitungen gewickelt. Unter Ausnutzung des Prinzips der magnetischen Induktion elektrischer Leiter werden diese Spulen mit definierten Stromverläufen beaufschlagt, sodass sich entsprechende Eigenschaften der auf das Wasser einwirkenden elektromagnetischen Feldern einstellen.

Derartige Verfahren machen es möglich, in dem Fluid bzw. Wasser eine ausreichende Zahl von sogenannten "Kalkkristallkeimen" zu erzeugen, die in dem gesamten Wasservolumen als Kristallisationszentrum dienen. In diesem Zusammenhang wird ausdrücklich noch einmal auf die DE 10004129A1 verwiesen, deren Inhalt durch Verweis darauf in die vorliegende Anmeldung inkorporiert wird.

Aufgabe der vorliegenden Erfindung ist es, eine Wasserbehandlungsvorrichtung bereitzustellen, die in einem Verfahren und in einer Vorrichtung gemäß der genannten DE 10004129A1 und in ähnlichen Verfahren eingesetzt werden kann und zu einer wirksameren Wasserbehandlung führen. Ebenfalls soll eine kompakte Form der Vorrichtung vorliegen, die den Strömungszustand des wassers beeinflussen kann.

Gelöst wird diese Aufgabe durch eine Wasserbehandlungsvorrichtung gemäß der Lehre des Anspruchs 1.

Die Spule oder Spulen der erfindungsgemäßen Wasserbehandlungsvorrichtung können mit einem Sputenstrom beaufschlagt werden, der in Abhängigkeit von definierten Frequenz-Interferenzmustern des Spulenstroms entsprechende elektromagnetische Felder im Wasser induziert. Zur Erzeugung des Spulenstroms dient eine Steuer- und Regelvorrichtung, die einen Mikrocontroller aufweist, der mindestens einen Oszillator zur Erzeugung der für die Frequenz-Interferenzmuster erforderlichen Frequenzimpulse ansteuert. Ein Zufallsgenerator wandelt den festen Oszillatortakt von Hochfrequenzimpulsen, die vom Oszillator generiert werden, in ein zeitliches Zufallssignal um. Die zuletzt geschilderten Einrichtungen sind in der genannten DE 10004129A1 ausführlicher beschrieben. Die erfindungsgemäße Wasserbehandlungs-vorrichtung kann zusammen mit diesen bekannten Einrichtungen eingesetzt werden, die dazu dienen, die entsprechenden elektro-magnetischen Felder im Fluid zu induzieren. Allerdings kann die erfindungsgemäße Wasserbehandlungsvorrichtung nicht nur zusammen mit den in der DE 10004129A1 beschriebenen Einrichtungen und gemäß dem dort beschriebenen Verfahren eingesetzt werden. Vielmehr kann die erfindungsgemäße Wasserbehandlungsvorrichtung bei allen Verfahren und Einrichtungen Anwendung finden, bei denen mit Hilfe von Induktionsspulen ein elektrisches Feld zur Wasserbehandlung erzeugt werden soll.

Die Wirksamkeit von Verfahren zur Wasserbehandlung unter Anwendung von elektromagnetischen Feidern wird häufig angezweifelt. Daher wurde das in der DE 10004129A1 beschriebene Verfahren von der technischen Universität Berlin daraufhin untersucht, ob die Änderung der Kristallstruktur von Wasserproben, die mit dem geschilderten Verfahren der physikalischen Wasserbehandlung aufbereitet wurden, nachgewiesen werden kann. Dies wird in dem genannten Prüfbericht bestätigt, denn dort ist ausgeführt, es sei nachgewiesen worden, dass mit dem genannten Verfahren die kristalline Struktur der Auskristallisierrungen von Wasserproben eindeutig verändert wird, indem fast alle Kristallstrukturen amorphisiert werden. Dieser Prüfbericht wurde am 10.10.2009 von der Zentraleinrichtung "Elektronenmikroskopie" der Technischen Universität Berlin angefertigt und veröffentlicht.

Die erfindungsgemäße Wasserbehandlungsvorrichtung ist mit einem Rohr ausgestattet, dass zur Wasserführung dient bzw. in dem bei Gebrauch Wasser fließt. Das Rohr ist mit mindestens einer Umwicklung versehen, welche eine Induktionsspule darstellt.

Das Rohr besitzt mindestens einen derart stark gekrümmten Abschnitt, dass die Mittellängsachse des Rohres auf einer Länge, welche maximal dem vierfachen Durchmesser des Rohres entspricht, eine Richtungsänderung von 60 bis 120° erfährt.

Wenn hier von Durchmesser des Rohres die Rede ist, dann bezieht sich das auf den Innendurchmesser. Bei nicht zylindrischen Querschnittsformen bezieht sich das auf den größten möglichen Innendurchmesser des Rohres.

Wenn im Rahmen der vorliegenden Änderung von einer Richtungsänderung die Rede ist, dann bezieht sich die entsprechende Angabe auf denjenigen Winkel, der einerseits von der Mittellängsachse desjenigen Abschnitts bzw. Bereichs, der vor dem stark gekrümmten Abschnitt liegt, und andererseits der Mittellängsachse desjenigen Abschnitts bzw. Bereichs, der nach dem stark gekrümmten Abschnitt liegt, eingeschlossen wird.

Die Abschnitte bzw. Bereiche des vor und nach dem stark gekrümmten Abschnitt können im übrigen gerade verlaufen, was bevorzugt ist, oder auch gekrümmt sein, jedoch nicht derart stark, dass Sie der Definition entsprechen, die im Rahmen der vorliegenden Anmeldung für den stark gekrümmten Abschnitt dient.

Vorzugsweise sind entweder der Abschnitt des Rohres vor dem stark gekrümmten Abschnitt oder der Abschnitt des Rohres nach dem stark gekrümmten Abschnitt gerade ausgerichtet. Insbesondere bevorzugt verlaufen sowohl der Abschnitt des Rohres vor als auch der Abschnitt des Rohres nach dem stark gekrümmten Abschnitt gerade.

Die Richtungsänderung des Rohres in einem stark gekrümmten Abschnitt beträgt vorzugsweise 90°.

Der hier angegebene Bereich für die Richtungsänderung von 60 - 120° umfasst alle in diesen Bereich fallenden geraden Einzelwerte und auch alle denkbaren und möglichen ungeraden Einzelwerte. Zu den geraden Einzelwerten gehören somit folgende: 60°, 61 °, 62°, 63°, 64°, 65°, 66°, 67°, 68°, 69°, 70°, 71°, 72°, 73°, 74°, 75°, 76°, 77°, 78°, 79°, 80°, 81°, 82°, 83°, 84°, 85°, 86°, 87°, 88°, 89°, 90°, 91°, 92°, 93°, 94°, 95°, 96°, 97°, 98°, 99°, 100°, 101°, 102°, 103°, 104°, 105°, 106°, 107°, 108°, 109°, 110°, 111°, 112°, 113°, 114°, 115°, 116°, 117°, 118°, 119° und 120° denkbar. Ungerade Werte sind beispielsweise 79,9°, 92,3° und 87,8°, um nur einige zu nennen.

Das erfindungsgemäße Rohr besteht aus einem Kunststoff, der für die Herstellung von Trinkwasserleitungen geeignet ist. Dazu zählen

PVC, PE, PP, PB und Polyamid. Insbesondere bevorzugt wird ein faserverstärkter Kunststoff eingesetzt

Vorzugsweise weist das Rohr der erfindungsgemäßen Wasserbehandlung eine innere und eine äußere Kunststoffschicht auf. Zwischen diesen ist eine Faserfüllung eingebracht. Derartige Faserverbundrohre werden beispielsweise von der Fa. Aquaterm unter der Marke "Fusioterm PPR(80) angeboten. Mit diesen Kunststoffrohren ist eine besonders wirksame Übertragung des durch die Induktionsspulen erzeugten elektromagnetischen Feldes möglich.

Gemäß der Erfindung ist der Querschnitt des Rohres am flussaufwärtigen Anfang auf einer Länge von 0 - 1 cm um 10 - 40 % reduziert und am flussabwärtigen Ende auf einer Länge von 0 - 1 cm um 10 - 50 % vergrößert.

Für alle geschilderten Querschnittsreduktionen und Querschnittserweiterungen gilt, dass vorzugsweise der Querschnitt des Rohres derart reduziert und vergrößert wird, dass die Größe der Querschnittsfläche des Rohres vor der Querschnittsreduktion und nach der Querschnittserweiterung die gleiche ist.

Die Bezeichnung Querschnitt bezeichnet im Rahmen der vorliegenden Unterlagen die Innenquerschnittsfläche und vorzugsweise die Innenquerschnittsform. Die Querschnitte in den verschiedenen Abschnitten des Rohres sind vorzugsweise form- und flächenkongruent. Sofern eine Querschnittsreduktion am Anfang erfolgt, gilt diese für die darauf folgenden Abschnitte.

Das Rohr der erfindungsgemäßen Wasserbehandlungsvorrichtung besitzt vorzugsweise eine U-Form. Zudem sind die beiden freien Enden der U-Form senkrecht zum dazugehörigen Schenkel der U-Form nach außen abgebogen. Weiterhin bevorzugt liegen alle Abschnitte des U-förmigen Rohres einschließlich der beiden freien Enden in einer Ebene.

Nach einer weiterhin bevorzugten Ausführungsform sind die beiden seitlichen Schenkel der U-Form gleich lang und verlaufen parallel zueinander. Der dazwischen liegende Bodenabschnitt der U-Form verläuft gerade sowie senkrecht zu den seitlichen Schenkeln. Das Verhältnis des Abstandes des Bodenabschnitts der U-Form zu den seitlich abgebogenen freien Enden zu dem Abstand der beiden seitlichen Schenkel voneinander, jeweils bezogen auf die Mittellängsachse, beträgt 0,3 bis 0,7 und insbesondere bevorzugt 0,35, 0,4, 0,43, 0,59 und 0,66.

Die Induktionsspule(n) der erfindungsgemäßen Wasserbehandlungsvorrichtung ist/sind üblicher Art und somit bekannt, sodass sie keiner weiteren Erläuterungen bedürfen. Das Rohr der erfindungsgemäßen Wasserbehandlungsvorrichtung ist zweckmäßigerweise von einem Gehäuse umgeben, aus dem nur die beiden freien Enden herausragen.

Die erfindungsgemäßen Wasserbehandlungsvorrichtung wird anhand der folgenden Zeichnungen, welche bevorzugte Ausführungsformen darstellen, näher beschrieben.

Von den Zeichnungen zeigen:
- Fig. 1:: Eine Seitenansicht eines Rohres für eine erfindungsgemäße Wasserbehandlungsvorrichtung mit im Wesentlichen U-Form,
- Fig. 2:: eine Aufsicht von oben auf das in der Figur 1 gezeigt Rohr,
- Fig. 3:: eine Seitenansicht einer weiteren Ausführungsform eines erfindungsgemäßen Rohres mit U-Form,
- Fig. 4:: eine dritte Ausführungsform eines erfindungsgemäßen Rohres,
- Fig. 5:: eine Seitenansicht einer fünften Ausführungsform des erfindungsgemäßen Rohres und
- Fig. 6:: eine sechste Ausführungsform des erfindungsgemäßen Rohres in Doppel-U-Form.

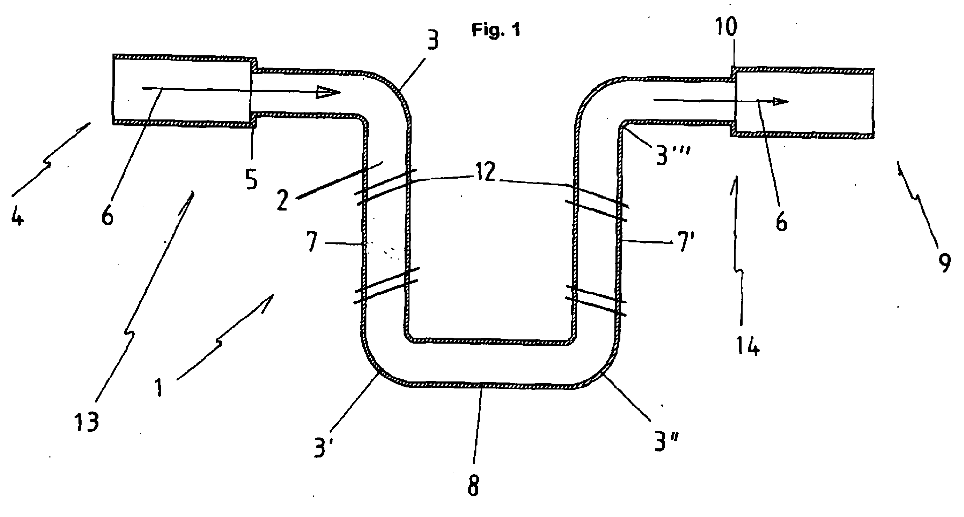

Figur 1 zeigt eine Seitenansicht eines Rohres 2 für eine erfindungsgemäße Wasserbehandlungsvorrichtung 1 mit U-Form.

Bei dem Rohr 2 handelt es sich um ein hohlzylindrisches Rohr. Die Querschnittsform kann jedoch beliebig sein, beispielsweise rechteckig, quadratisch oder polygonal.

Am flussaufwärtigen Anfang 4 des Rohres 2, welches ein seitlich abgebogenes freies Ende 13 des Rohres 2 bildet, wird der Querschnitt des Rohres 2 schlagartig und somit auf einer Länge von 0 cm reduziert. Nach dieser Querschnittsreduktion 5 erstreckt sich das Rohr 2 gerade weiter bis zum ersten stark gekrümmten Abschnitt 3. In diesem stark gekrümmten Abschnitt 3 erfährt die Mittellängsachse 6 des Rohres 2 eine Richtungsänderung von ca. 90°.

Das Rohr 2 erstreckt sich dann gerade weiter (in der Figur 1 in der Papierebene nach unten) und bildet den linken Schenkel 7 der U-Form. Im Bereich dieses Schenkels 7 verläuft das Rohr 2 gerade. Zudem ist das Rohr 2 dort mit einer ersten Induktionsspule 12 bereichsweise umwickelt, die in der Figur 1 zeichnerisch nur angedeutet ist. Diese Induktionsspule 12 ist üblicher Art und mit einer per se bekannten Einrichtung (nicht gezeigt) zur Strombeaufschlagung verbunden.

Am unteren Ende des Schenkels 7 geht das Rohr 2 in einen zweiten stark gekrümmten Abschnitt 3' über und erfährt dabei eine weitere Richtungsänderung von ca. 90° in die Horizontale. Dieser horizontale im wesentlichen gerade Abschnitt bildet die Basis bzw. den Boden 8 der U-Form.

Im weiteren Verlauf geht das Rohr 2 am rechten Ende der Basis 8 in den nächsten stark gekrümmten Abschnitt 3" über. Hier erfährt das Rohr 2 eine erneute Richtungsänderung um etwa 90° von der Horizontalen in die Vertikale. Dieser vertikale Abschnitt bildet den zweiten Schenkel 7' der U-Form und ist ebenfalls mit einer Induktionsspule 12 der oben beschriebenen Art bereichsweise umwickelt.

Der Schenkel 7' geht am oberen Ende in einen vierten stark gekrümmten Abschnitt 3"' über und erfährt dabei eine Richtungsänderung von ca. 90° in die Horizontale. Im weiteren Verlauf des Rohres 2 erweitert sich der Querschnitt in der Nähe des flussabwärtigen Endes 9, welches das andere freie, seitlich abgebogene Ende 14 des Rohres 2 bildet, die entsprechende Querschnittserweiterung 10 entspricht der Querschnittsreduktion 5.

Das Rohr 2 der Figur 1 ist bezüglich einer Ebene, die senkrecht zur Papierebene und zwischen den beiden Schenkeln 7, 7' verläuft, spiegelbildlich ausgebildet. Die Länge der Mittellängsachse 6 im Bereich der stark gekrümmten Abschnitte 3, 3', 3" und 3"' entspricht in etwa dem Durchmesser des Rohres 2.

An den Orten der Querschnittsreduktion 5 bzw. Querschnittserweiterung 10 sowie an den stark gekrümmten Abschnitten 3, 3', 3" und 3"' geht das laminar fließende Wasser in ein turbulent fließendes Wasser über. Auf diese Weise wird für eine starke Verwirbelung des zu behandelnden Wassers Sorge getragen. An den übrigen Abschnitten des Rohres 2 fließt das Wasser mehr oder weniger laminar.

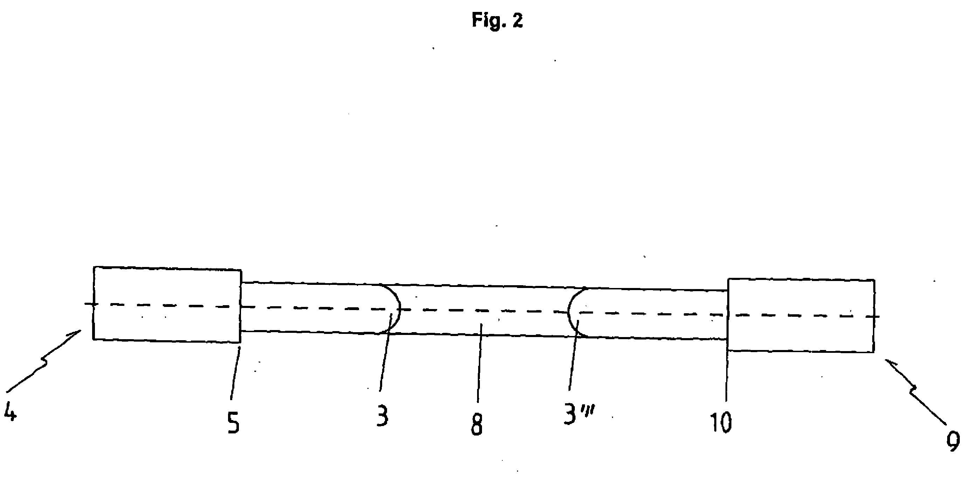

Das U-förmige Rohr 2 liegt mit seinen verschiedenen, oben geschilderten Abschnitten in einer Ebene, wie dies aus der Figur 2 ersichtlich ist, wobei die Induktionsspulen 12 in der Figur 2 nicht gezeigt sind.

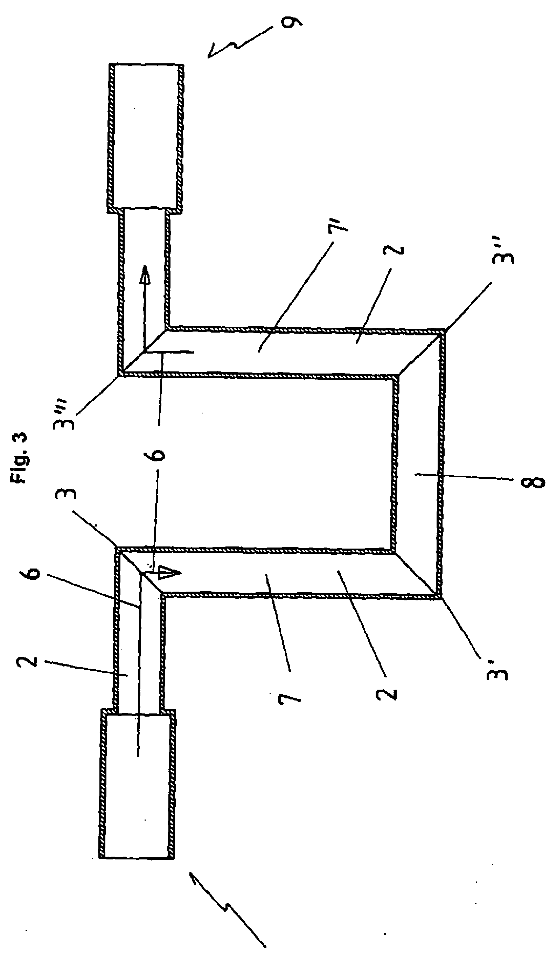

Die in der Figur 3 gezeigte zweite Ausführungsform des erfindungsgemäßen Rohres 2 entspricht dem in der Figur 1 gezeigten Rohr 2 (die Induktionsspulen 12 sind in den Figuren 3 bis 5 nicht dargestellt bzw. weggelassen) in fast allen Elementen. Der Unterschied besteht lediglich im Bereich der stark gekrümmten Abschnitte 3, 3', 3" und 3"'. Während bei dem in der Figur 1 gezeigten Rohr 2 die Richtungsänderung der Mittellängsachse 6 kontinuierlich erfolgt, erfolgt diese Richtungsänderung bei der in der Figur 3 gezeigten Ausführungsform abrupt. Mit anderen Worten, die Richtungsänderung der Mittellängsachse 6 ist diskontinuierlich.

In den Bereichen außerhalb der stark gekrümmten Abschnitte 3, 3', 3" und 3"' sowie außerhalb der Abschnitte der Querschnittsreduktion bzw. -erweiterung 5, 10 verläuft das Rohr 2 gerade und somit ohne Richtungsänderung der Mittellängsachse.

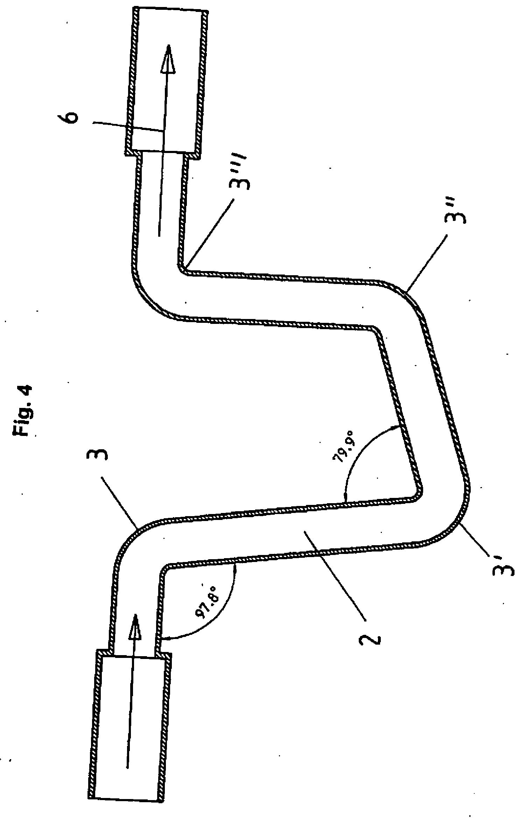

Das in der Figur 4 in Seitenansicht gezeigte Rohr 2 entspricht im wesentlichen dem in der Figur 1 gezeigten Rohr 2. Die Unterschiede liegen lediglich in dem Ausmaß der Richtungsänderung der Mittellängsachse 6 in den stark gekrümmten Abschnitten 3, 3', 3" und 3"'. So beträgt die Richtungsänderung der Mittellängsachse 6 im stark gekrümmten Abschnitt 3 etwa 97,8° und im stark gekrümmten Abschnitt 3' in etwa 79,9°. Die Richtungsänderung in den stark gekrümmten Abschnitten 3" und 3"' beträgt 92,3° bzw. 90°.

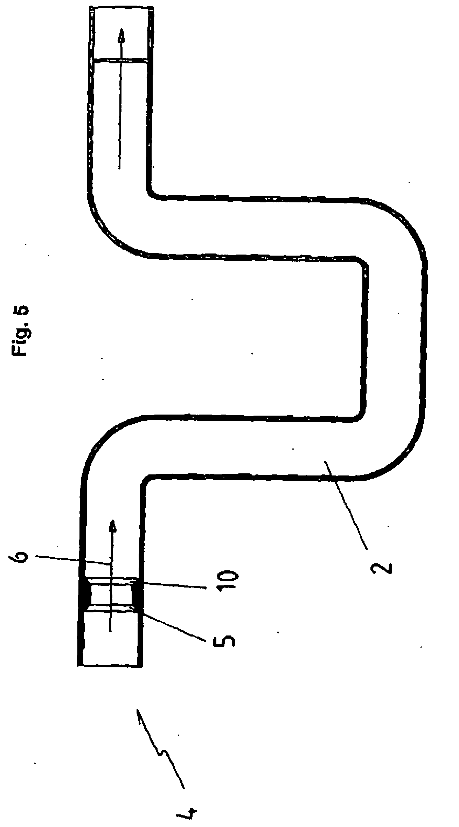

Das in der Figur 5 in Seitenansicht gezeigte Rohr 2 entspricht hinsichtlich seiner U-Form und der Ausbildung im Bereich der U-Form dem in der Figur 1 gezeigten Rohr 2. Der Unterschied besteht darin, dass bei dem Rohr 2 gemäß der Figur 5 am flussaufwärtigen Anfang 4 sowohl eine Querschnittsreduktion als auch eine Querschnittserweiterung eingebaut ist. Mit anderen Worten, der Querschnitt des Rohres 2 wird am flussaufwärtigen Anfang 4 sowohl einmal reduziert als auch dort einmal erweitert, so dass der Querschnitt vor und nach dieser Querschnittsänderung der gleiche ist.

Eine derartige Querschnittsreduktion und -erweiterung kann auch am flussabwärtigen Ende 9 entweder zusätzlich oder stattdessen angeordnet sein (in der Figur 5 nicht gezeigt).

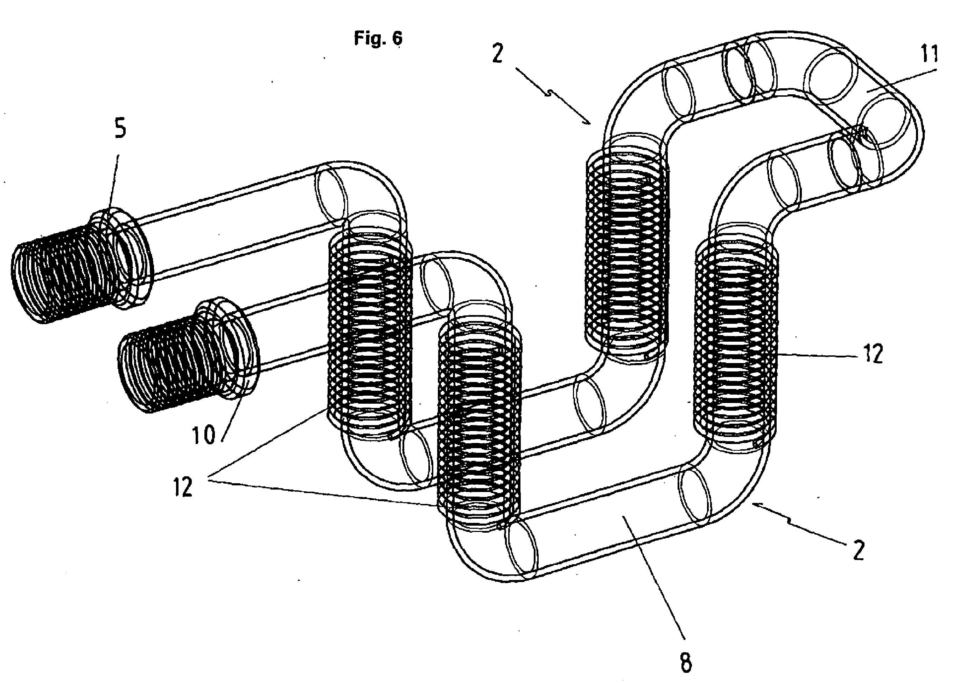

Bei dem in der Figur 6 gezeigten Rohr 2 handelt es sich um ein solches, das dem in der Figur 1 gezeigten Rohr hinsichtlich der U-Form ebenfalls stark ähnelt. Allerdings weist dieses Rohr 2 zwei parallel zueinander angeordnete U-förmige Abschnitte auf. Statt des flussabwärtigen Endes 9 bei dem in der Figur 1 gezeigten Rohr 2 geht dieses Rohr dort in einen die beiden U-Form verbindenden Abschnitt 11 über.

Eine Querschnittsreduktion 5 des Rohres 2 erfolgt bei dieser Ausführungsform dadurch, dass ein ½.Zoll-Rohr (12.7 mm) auf übliche Weise auf ein 3/8-Zoll-Rohr (9.525 mm) reduziert wird. Am Ende des Rohres 2 erfolgt dann eine Querschnittserweiterung 10, in dem das Rohr 2, das ein 3/8-Zoll-Rohr darstellt, ebenfalls auf übliche Weise auf ein ½.Zoll-Rohr erweitert wird.

### Bezugszeichenhste

- 1: Wasserbehandlungsvorrichtung
- 2: Rohr
- 3, 3', 3", 3"': stark gekrümmter Abschnitt
- 4: flussaufwärtiger Anfang
- 5: Querschnittsreduktion des Rohres 2
- 6: Mittellängsachse
- 7, 7': Schenkel
- 8: Boden
- 9: flussabwärtiges Ende
- 10: Querschnittserweiterung des Rohres 2
- 11: verbindender Abschnitt
- 12: Induktionsspule
- 13, 14: freies Ende

## Patentansprüche

1. Wasserbehandlungsvorrichtung mit einem Rohr (2) aus Kunststoff, das zur Wasserführung dient, mit mindestens einer eine Induktionsspule (12) darstellenden Umwicklung versehen ist und mindestens einen derart stark gekrümmten Abschnitt (3,3',3",3"') besitzt, dass die Mittellängsachse des Rohres (2) auf einer Länge, welche maximal dem vierfachen Durchmesser des Rohres (2) entspricht, eine Richtungsänderung von 60° bis 120° erfährt, **dadurch gekennzeichnet, dass**
der Querschnitt des Rohres (2) am flussaufwärtigen Anfang (4) auf einer Länge von 0 bis 1 cm um 10 % bis 40 % reduziert und am flussabwärtigen Ende (9) auf einer Länge von 0 bis 1 cm um 10 % bis 50 % vergrößert wird.

2. Wasserbehandlungsvorrichtung nach Anspruch 1,
**dadurch gekennzeichnet, dass**
die Richtungsänderung ca. 90° beträgt.

3. Wasserbehandlungsvorrichtung nach Anspruch 1 oder 2,
**dadurch gekennzeichnet, dass**
i) der Abschnitt des Rohres (2) vor einem stark gekrümmten Abschnitt (3,3',3",3"') oder der Abschnitt des Rohres (2) nach einem stark gekrümmten Abschnitt (3,3',3",3"') gerade verläuft oder
ii) sowohl der Abschnitt des Rohres (2) vor einem stark gekrümmten Abschnitt (3,3',3",3"') als auch der Abschnitt des Rohres (2) nach einem stark gekrümmten Abschnitt (3,3',3",3"') gerade verlaufen.

4. Wasserbehandlungsvorrichtung nach einem der vorhergehenden Ansprüche,
**dadurch gekennzeichnet, dass**
das Rohr (2) ein Faserverbundrohr darstellt.

5. Wasserbehandlungsvorrichtung nach Anspruch 4,
**dadurch gekennzeichnet, dass**
der Querschnitt des Rohres (2) derart reduziert und vergrößert wird, das die Größe der Querschnittsfläche des Rohres (2) vor dem Anfang (4) und nach dem Ende (9) die gleiche ist.

6. Wasserbehandlungsvorrichtung nach Ansprüche 5,
**dadurch gekennzeichnet, dass**
alle Abschnitte des Rohres (2) nachdem der Querschnitt am Anfang (4) reduziert wurde und bis zu Erweiterung des Querschnitts am Ende (9) die gleiche Innenquerschnittsfläche und die gleiche Innenquerschnittsform besitzen.

7. Wasserbbhandlungsvorrichtung nach einem der vorhergehenden Ansprüche,
**dadurch gekennzeichnet, dass**
das Rohr (2) ein U-Form besitzt und die beiden freien Enden der U-Form senkrecht zum dazugehörigen Schenkel (7,7') der U-Form nach außen abgebogen sind.

8. Wasserbehandlungsvorrichtung nach Anspruch 7,
**dadurch gekennzeichnet, dass**
alle Abschnitte des U-förmigen Rohres (2) in einer Ebene liegen.

9. Wasserbehandlungsvorrichtung nach Anspruch 7 oder 8,
**dadurch gekennzeichnet, dass**
die beiden seitlichen Schenkel (7,7') der U-Form gleich lang sind und parallel verlaufen,
der dazwischen liegende Bodenabschnitt (8) der U-Form gerade sowie senkrecht zu den seitlichen Schenkeln (7,7') verläuft und
das Verhältnis des Abstandes des Boden (8) der U-Form zu den seitlich abgebogenen freien Enden zu dem Abstand der beiden seitlichen Schenkel (7,7') voneinander, jeweils bezogen auf die Mittellängsachse (6), 0,3 bis 0,7 beträgt.

## Claims

1. Water treatment device with a plastics pipe (2) which serves for conveying water, is provided with at least one winding representing an induction coil (12) and has at least one section (3, 3', 3", 3"') which is curved so sharply that the centre longitudinal axis of the pipe (2) undergoes a direction change of 60° to 120° over a length which corresponds to a maximum of four times the diameter of the pipe (2), **characterised in that** the cross-section of the pipe (2) at the upstream start (4) is reduced by 10 % to 40% to a length of 0 to 1 cm and at the downstream end (9) is increased by 10 % to 50% to a length of 0 to 1 cm.

2. Water treatment device according to claim 1 **characterised in that** the direction change amounts to about 90 degrees.

3. Water treatment device according to claim 1 or 2 **characterised in that**
i) the section of the pipe (2) in front of a sharply curved section (3, 3',3", 3"') or the section of the pipe (2) after a sharply curved section (3,3',3", 3"') runs straight or
ii) both the section of the pipe (2) in front a sharply curved section (3,3',3",3"') and also the section of the pipe (2) after a sharply curved section (3, 3', 3", 3"') run straight.

4. Water treatment device according to one of the preceding claims, **characterised in that** the pipe (2) is a fibre compound pipe.

5. Water treatment device according to claim 4, **characterised in that** the cross-section of the pipe (2) is reduced and enlarged in such a way that the size of the cross-sectional surface of the pipe (2) in front of the start (4) and after the end (9) is the same.

6. Water treatment device according to claim 5, **characterised in that** all the sections of the pipe (2) after which the cross-section at the start (4) was reduced and up to the expansion of the cross-section at the end (9) have the same internal cross-sectional surface area and the same internal cross-sectional shape.

7. Water treatment device according to one of the preceding claims **characterised in that** the pipe (2) has a U-shape and the two free ends of the U-shape are bent outwards perpendicular to the associated arms (7, 7') of the U-shape.

8. Water treatment device according to claim 7 **characterised in that** all the sections of the U-shaped pipe (2) lie in one plane.

9. Water treatment device according to claim 7 or 8 **characterised in that** the two side arms (7,7') of the U-shape are of equal length and run parallel; the base section (8) of the U-shape lying inbetween runs straight as well as perpendicular to the side arms (7,7') and the ratio of the distance of the base (8) of the U-shape from the laterally bent free ends to the distance of the two side arms (7,7') from one another, each in relation to the centre longitudinal axis (6), amounts to 0.3 to 0.7.

## Revendications

1. Dispositif de traitement de l'eau avec un tube (2) en matériau synthétique, lequel sert au cheminement de l'eau, pourvu d'au moins un bobinage, représentant une bobine d'induction (12), et qui possède au moins une section (3, 3', 3", 3"') si fortement incurvée que l'axe central longitudinal du tube (2) connaît une modification de sa direction comprise entre 60° et 120°, sur une longueur, laquelle correspond au plus à quatre fois le diamètre du tube (2),
**caractérisé en ce que**
la section transversale du tube (2) est réduite de 10% à 40% sur une longueur de 0 à 1 cm au niveau de l'embouchure (4) se trouvant en amont du flux, et est agrandie de 10% à 50% sur une longueur de 0 à 1 cm au niveau de l'extrémité (9) se trouvant en aval du flux.

2. Dispositif de traitement de l'eau selon la revendication 1,
**caractérisé en ce que**
la modification de la direction s'élève à environ 90°.

3. Dispositif de traitement de l'eau selon la revendication 1 ou 2,
**caractérisé en ce que**
i) la section du tube (2) s'étend de manière rectiligne devant une section (3, 3', 3", 3"') fortement incurvée ou la section du tube (2) s'étend de manière rectiligne après une section (3, 3', 3", 3"') fortement incurvée, ou
ii) de même que la section du tube (2) s'étend de manière rectiligne devant une section (3, 3', 3", 3"') fortement incurvée, la section du tube (2) s'étend également de manière rectiligne après une section (3, 3', 3", 3"') fortement incurvée.

4. Dispositif de traitement de l'eau selon l'une des revendications précédentes,
**caractérisé en ce que**
le tube (2) représente un tube en fibres composites.

5. Dispositif de traitement de l'eau selon la revendication 4,
**caractérisé en ce que**
la section transversale du tube (2) est réduite et agrandie, de telle sorte que la taille de la surface de la section transversale du tube (2) est la même avant l'embouchure (4) et après l'extrémité (9).

6. Dispositif de traitement de l'eau selon la revendication 5,
**caractérisé en ce que**
toutes les sections du tube (2), après que la section transversale ait été réduite au niveau de l'embouchure (4) et jusqu'à l'agrandissement de la section transversale à l'extrémité (9) possèdent la même surface de section transversale intérieure et la même forme de section transversale intérieure.

7. Dispositif de traitement de l'eau selon l'une des revendications précédentes,
**caractérisé en ce que**
le tube (2) possède une forme en « U » et les deux extrémités libres de la forme en « U » sont coudées vers l'extérieur et de manière perpendiculaire par rapport à la patte (7, 7') qui en fait partie.

8. Dispositif de traitement de l'eau selon la revendication 7,
**caractérisé en ce que**
toutes les sections du tube (2) en forme de « U » reposent dans un plan.

9. Dispositif de traitement de l'eau selon la revendication 7 ou 8,
**caractérisé en ce que**
- les deux pattes (7, 7') latérales de la forme en « U » sont de la même longueur et s'étendent de manière parallèle,
- la section de fond (8) de la forme en « U », positionnée de manière intercalée, s'étend de manière rectiligne ainsi que de manière perpendiculaire par rapport aux pattes (7, 7') latérales et le ratio entre la distance du fond (8) de la forme en « U » avec les extrémités libres coudées de manière latérale, d'une part, et la distance des deux pattes (7, 7') latérales l'une par rapport à l'autre, d'autre part, est respectivement compris entre 0, 3 et 0,7, mesuré par rapport à l'axe central longitudinal (6).
